# EUROPEAN PATENT APPLICATION

(11) **EP 1 134 638 A2**
(43) Date of publication of application: **19.09.2001**
(21) Application number: 01106046.4
(22) Date of filing: 12.03.2001
(51) Int. Cl.: G05B 19/418

(54) **Simulator and simulation method**

(30) Priority: 13.03.2000 JP 2000069232
(71) Applicant: KABUSHIKI KAISHA TOSHIBA, Kawasaki-shi, Kanagawa-ken 210-8572 (JP)
(72) Inventor: Otsuka, Toru, Intel. Prop. Div. K.K. Toshiba, Tokyo 105-8001 (JP)
(74) Representative: Kramer, Reinhold, Dipl.-Ing.

(57) **Abstract**

A simulator has a simulation CPU (115) and a memory (114a) having a plurality of memory areas which include memory areas write-accessible from a control CPU (113) connected to the simulator and memory areas read-accessible from the simulation CPU. Control information written in the memory area by the control CPU is read out by the simulation CPU. The simulation CPU executes simulation on the basis of the control information and writes the execution result of the simulation in the memory.

## Description

The present invention relates to a simulator which reacts as if there were a real machine to debug a mechanism control program without using any real machine, and a simulation method.

Debug of a mechanism control program is done by preparing a mechanism and hardware for driving and controlling it (mechanism + hardware is called a real machine), and actually controlling the real machine.

However, in this technique of actually controlling the real machine to debug the mechanism control program, full-scale debug is impossible before the real machine is completed. Additionally, it is difficult to intentionally generate rare anomalies, so sufficient verification cannot be executed.

It is an object of the present invention to provide a simulator and simulation method which make it possible to debug a control program as if a real machine were used even before the real machine is completed, and to verify the control program by arbitrarily generating various anomalies.

In order to achieve the above problems and achieve the above object, a simulator and simulation method according to the present invention have the following arrangements.
(1) According to the present invention, there is provided a simulator comprising a simulation CPU, a memory write-accessible from one of the simulation CPU and a control CPU connected to the simulator and read-accessible from the other, means for causing the simulation CPU to read out control information written in the memory by the control CPU, and means for writing an execution result of execution of simulation based on the control information in the memory in a state readable by the control CPU.
(2) According to the present invention, there is also provided a simulation method comprising the steps of causing a control CPU to write control information in a first memory, causing a simulation CPU to read out the control information written in the first memory, causing the simulation CPU to execute simulation based on the control information, causing the simulation CPU to write a simulation result in a second memory, and causing the control CPU to read out the simulation result written in the second memory.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing the schematic arrangement of real machine hardware so as to explain debug using a real machine;
FIG. 2 is a block diagram showing the schematic arrangement of a simulator so as to explain debug without using any real machine;
FIG. 3A is a view for explaining operation (operation such as a read or write from/in a register) of the simulator shown in FIG. 2;
FIG. 3B is a flow chart showing an outline of the operation of the simulator shown in FIG. 2;
FIG. 4 is a flow chart showing interrupt processing by a control program;
FIG. 5 is a flow chart showing task processing by the control program;
FIGS. 6A and 6B are block diagrams showing an example of the real machine;
FIG. 7 is a block diagram showing the schematic arrangement of real machine hardware (with a plurality of units) so as to explain debug using a real machine;
FIG. 8 is a block diagram showing the schematic arrangement of a simulation system (with a plurality of simulators) so as to explain debug without using any real machine;
FIGS. 9A and 9B are block diagrams showing details of the internal arrangement of a CPU-side ASIC and simulator in the simulation system shown in FIG. 8;
FIGS. 10A and 10B are flow charts showing operation of the simulation system;
FIG. 11 is a block diagram showing the schematic arrangement of a real machine having a reception section and a plurality of stack sections;
FIG. 12 is a block diagram showing the schematic arrangement of a simulation system for the real machine shown in FIG. 11;
FIG. 13 is a view showing communication formats; and
FIG. 14 is a block diagram showing a simulation system using both a simulator and a real machine.

An embodiment of the present invention will be described below with reference to the accompanying drawing.

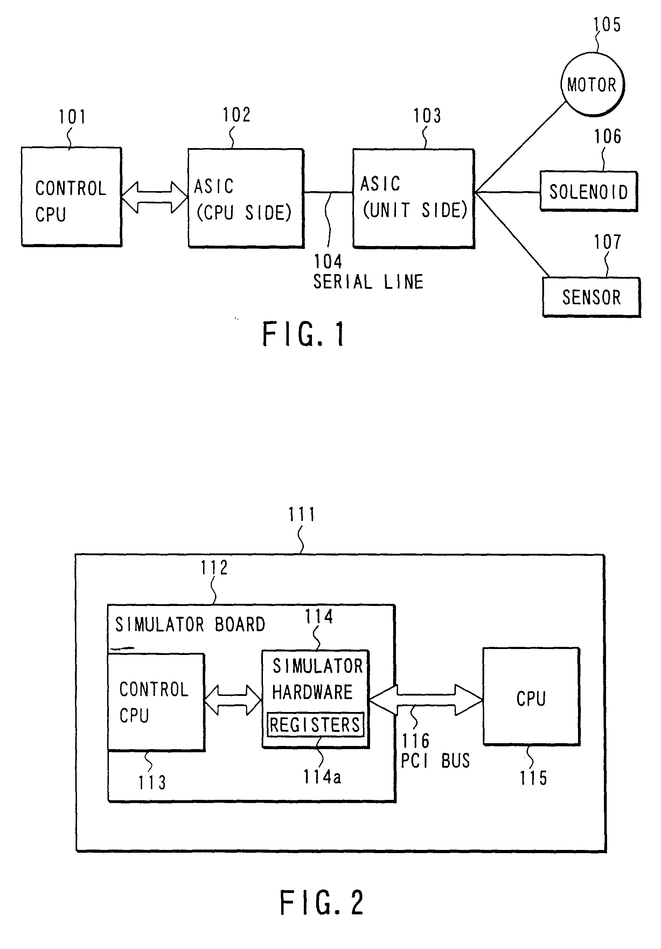

Debug using a real machine will be described with reference to FIG. 1, and as a comparison, debug (simulator) of the present invention without using any real machine will be described with reference to FIG. 2. FIG. 1 is a block diagram showing the schematic arrangement of real machine hardware. FIG. 2 is a block diagram showing the schematic arrangement of the simulator.

As shown in FIG. 1, in the real machine, an ASIC 102 (CPU side) for controlling the mechanism is connected to a control CPU 101. This ASIC 102 is connected to an ASIC 103 through a serial line 104. The ASIC 103 is connected to a motor 105, solenoid 106, and sensor 107. The control CPU 101 can control the motor 105, solenoid 106, and sensor 107 connected to the ASIC 103 by writing control information in the register of the ASIC 102.

The motor 105, solenoid 106, and sensor 107 operate in accordance with the control information transmitted from the control CPU 101 through the ASIC 103, operations of the mechanism and medium occur, and as a result, the ON/OFF state of a sensor changes. The control CPU 101 can detect the status of each sensor connected to the ASIC 103 by looking up the register of the ASIC 102.

To the contrary, in the simulator, simulator hardware 114 is connected to a control CPU 113 on a simulator board 112, as shown in FIG. 2. When viewed from the control CPU 113, the simulator hardware 114 has registers 114a comprising a sensor information lookup register, output port control information write register, motor control command write register, response information lookup register, interrupt status register, and the like.

These registers 114a have the same arrangement as that of the register of the ASIC 102 and correspond to memories that can be read- or write-accessed from both the control CPU 113 and a CPU 115. When the real machine control program is executed on the control CPU 113, operation is actually performed while looking up and write-accessing a predetermined one of the registers 114a in the simulator hardware 114.

Control information written in a predetermined one of the registers 114a by the control CPU 113 is transmitted, through a PCI bus 116, to a simulator program that is executed on the CPU 115 of a personal computer 111. The access through the PCI bus is actually executed by a driver, and a DLL function is used to connect the CPU 115 to the driver.

The simulator program looks up a mechanism operation description defined in advance, simulates the operation according to the control information from the control CPU 113, and writes a resultant change in sensor in a predetermined one of the registers 114a of the simulator hardware 114. The control CPU 113 looks up the predetermined one of the registers 114a of the simulator hardware 114, thereby reading the simulation result written by the simulator program as a change in sensor as if the control CPU 113 looked up a change in sensor status as a result of mechanism operation in the real machine.

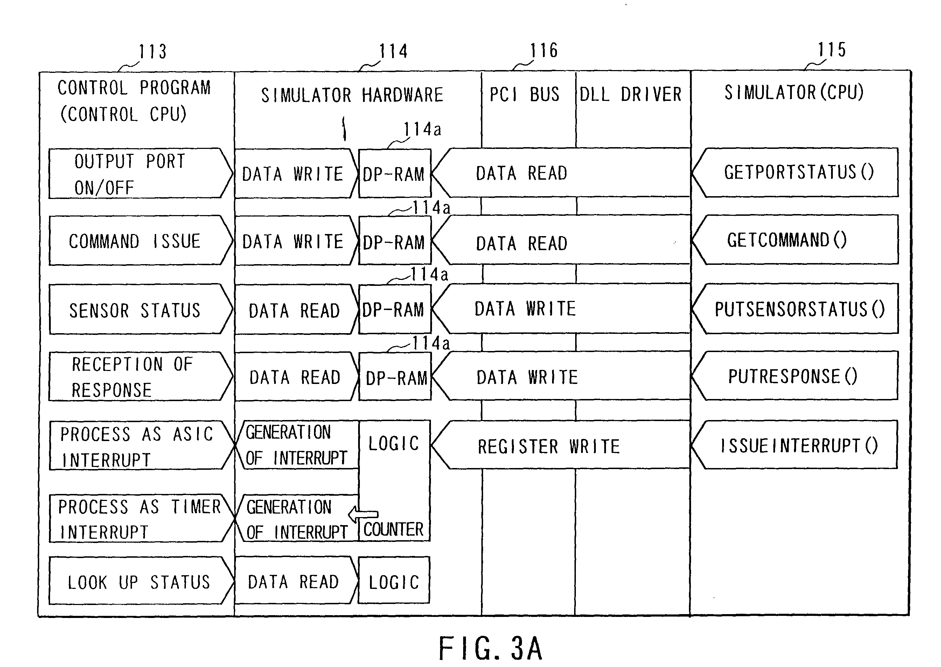

This operation will be described with reference to FIG. 3A. FIG. 3A is a view showing the flow of a data read/write and interrupt processing for the registers of the simulator hardware.

### 1. Output Port

Data written into the output port by the control CPU 113 is written in the DP-RAM in the simulator hardware 114. The simulator software can read out the data by calling a GetPortStatus() function.

### 2. Command

Data written into the output port by the control CPU 113 is written in the DP-RAM in the simulator hardware 114. The simulator software can read out the written command by calling a GetCommand() function.

### 3. Sensor

Sensor status data is set in the DP-RAM in the simulator hardware 114 by calling a PutSensorStatus() function from the simulator software. The control CPU 113 reads out a predetermined address in the simulator hardware 114, thereby reading out the sensor status data.

### 4. Response

A response is set in the DP-RAM in the simulator hardware 114 by calling a PutResponse() function from the simulator software. The control CPU 113 reads out a predetermined address in the simulator hardware 114, thereby reading out response data.

### 5. Interrupt

The program of the control CPU 113 treats an interrupt from the CPU 115 for simulation as a trigger. Hence when the simulator software side ends processing for a predetermined period of, time (for example, 128 *µ* sec), updates the sensor status, and writes the response, an IssueInterrupt() function must be called to prompt the control CPU 113 side to execute the processing.

### 6. Status

The circuitry in the simulator hardware 114 updates a register corresponding to the status register of the ASIC in accordance with an access on the control CPU 113 side or the simulator software side. Data to be actually updated are three bits representing write buffer full, write buffer empty, and presence of reception data.

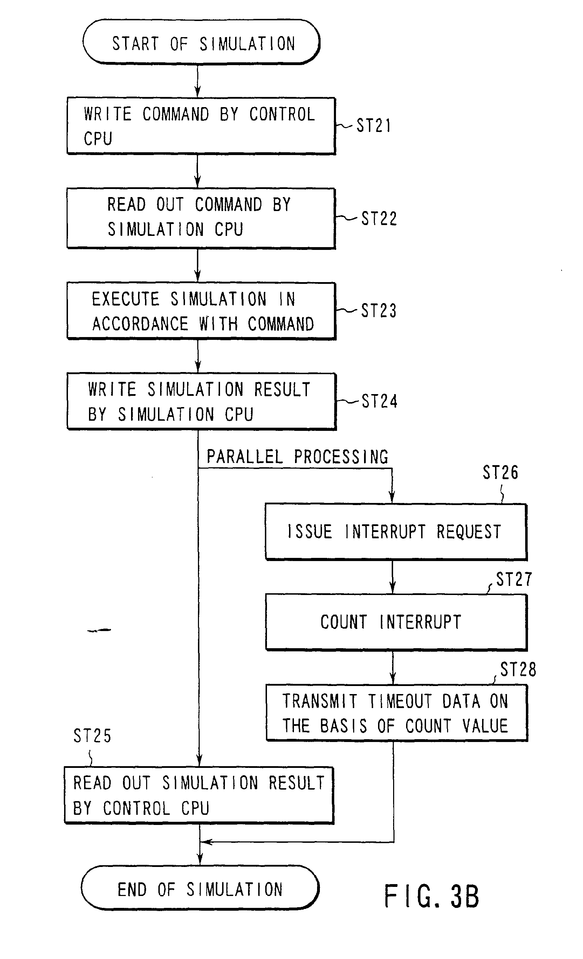

The above-described simulation method will be reviewed with reference to FIG. 3B. As shown in FIG. 3B, first, a command (control information) is written in a predetermined register (first memory) out of the registers 114a by the control CPU 113 (ST21). The written command is read out by the CPU 115 for simulation (ST22). Simulation based on the readout command is executed by the CPU 115 (ST23). As the simulation progresses, a simulation result (change in sensor level) is obtained. The simulation result is written in a predetermined register (second memory) out of the registers 114a by the CPU 115 (ST24). After that, the flow advances to parallel processing. On one branch of the parallel processing, the written simulation result is read out by the control CPU 113 (ST25). On the other branch of the parallel processing, an interrupt request is issued to the control CPU 113 (ST26). This interrupt is counted (ST27), and timeout data is transmitted on the basis of the count value (ST28). The interrupt processing and timeout processing will be described later in detail.

Execution synchronization between the simulator program (executed by the CPU 115) and the control program (executed by the control CPU 113) will be described next.

In the hardware of a real machine, sensor scanning is performed at a period of 100 *µ* sec to 1 msec. However, a simulator program is software that runs on a personal computer, and it is difficult for the current CPU to execute simulation and reflection of its result at the same period as the sensor scanning period of the real machine. In addition, since the time required for simulation changes depending on the state of the mechanism in the simulator, synchronization with the control CPU 113 is necessary.

To obtain this synchronization, the above-described interrupt is used. The simulator side issues an interrupt request after simulation of one cycle is ended, and the sensor status and response are written in a predetermined one of the registers 114a of the simulator hardware 114.

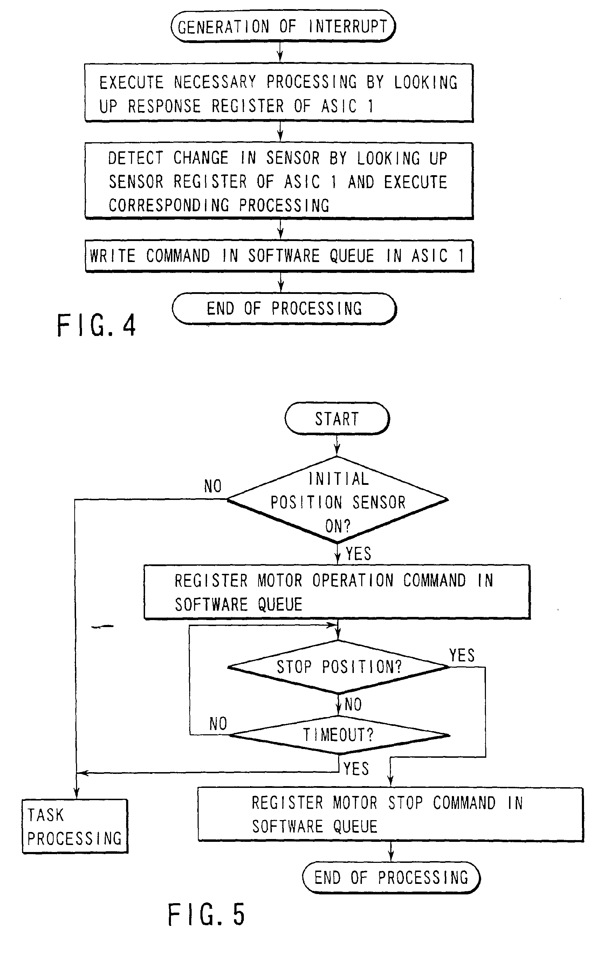

The control program is designed to execute interrupt processing shown in FIG. 4. In this interrupt processing, mechanism control processing is triggered by an interrupt or a change in sensor. That is, when an interrupt occurs, necessary processing is executed by looking up the response register in the ASIC (simulator hardware). A change in sensor is detected by looking up the sensor register in the ASIC (simulator hardware), and corresponding processing is executed. Then, the command in the software queue is written in the ASIC (simulator hardware), and the processing is ended.

In the real machine system, the ASIC 102 generates an interrupt at a timing when a series of serial communications with the ASIC 103 are ended (the period is 100 *µ* sec to 1 msec, as described above).

In task processing shown in FIG. 5, processing is executed independently of an interrupt. However, since no stop motor command is registered before the sensor status changes, the processing is executed without any shift in phase between the control-side processing and the simulator-side processing.

In the interrupt processing, the processing is executed only when the simulator issues an interrupt request. For this reason, the processing can be executed without any problem such as overflow of command registration, double read of response, or read miss.

Another problem is timeout in the task processing.

Generally, the control CPU 113 measures the time using an interval timer or the like. If the mechanism operation is not ended in a predetermined time, a timeout error is detected. Since the speed of simulation using software is lower than the operation speed of the real machine, a timeout error occurs with the same timeout time as in the real machine.

As measures against this problem, the timeout value of the control CPU is changed, the timer period as a reference is shortened, or the timer is changed to a timer synchronized with the simulator side. However, the two former methods cannot cover a variation in simulation execution time, and a very large margin must be taken into consideration for the setting. In this case, the simulation execution time consequently becomes longer than necessary, or for an intentional error, the time when the error occurs can hardly be predicted.

To avoid these problems, interrupt requests from the simulator are counted by the simulator hardware or the software (DLL function or the like) on the personal computer, and a simulated timer interrupt is generated at a predetermined count interval.

The above present invention will be summarized below.
1. Registers having the same arrangement as in the real machine control system are prepared in the memory space of the CPU for executing the control program, thereby simulating a register read/write as if a mechanism control ASIC were connected.
2. Since the speed of the simulator operated by PC software is lower than that of the real machine hardware, the control program has a mechanism for establishing synchronization with the simulator side (preventing any progress in phase which takes place without waiting for the operation of hardware). In addition, the program for operating the real machine is made executable by the simulator with a minimum modification.

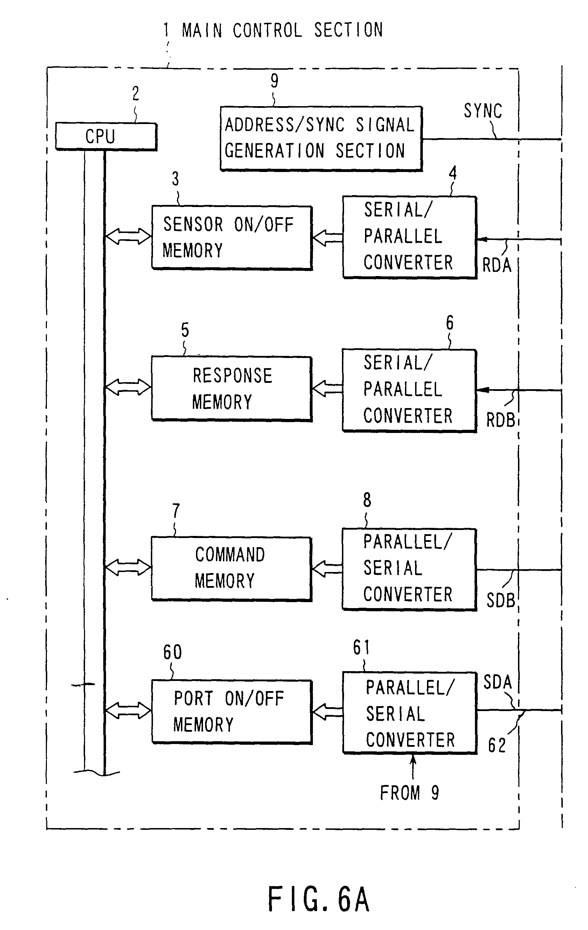

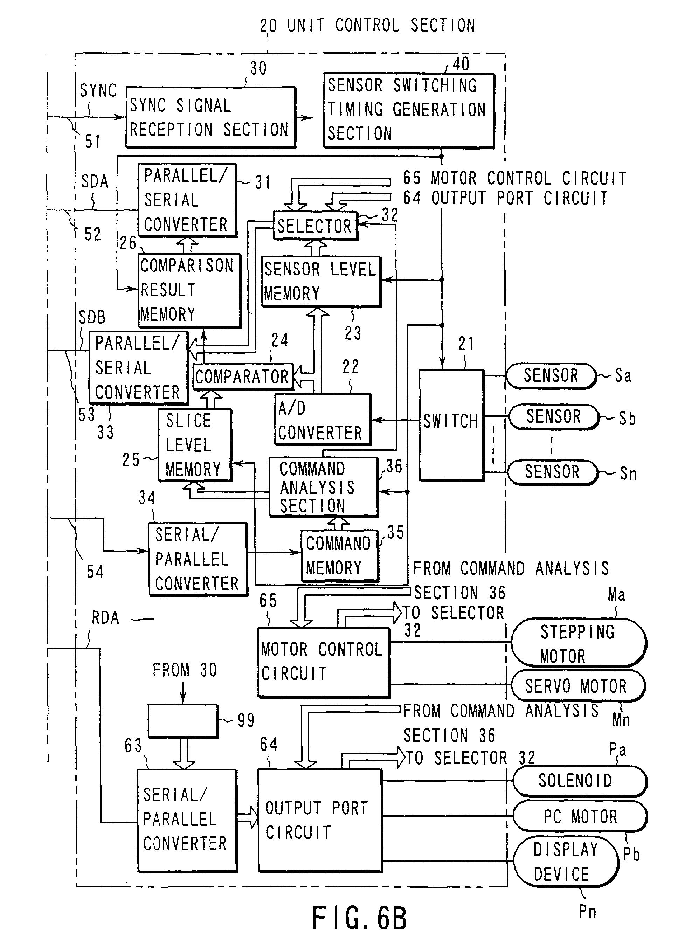

An example of the above-described real machine hardware will be described here with reference to FIGS. 6A and 6B.

As shown in FIGS. 6A and 6B, a main control section 1 has a CPU 2. The main control section 1 corresponds to the above-described ASIC 102, and the CPU 2 corresponds to the above-described control CPU 101. A sensor ON/OFF memory 3, response memory 5, command memory 7, and port ON/OFF memory 60 are connected to the CPU 2. The sensor ON/OFF memory 3, response memory 5, command memory 7, and port ON/OFF memory 60 correspond to the above-described registers. The sensor ON/OFF memory 3 is connected to a serial line 52 through a serial/ parallel converter 4. The response memory 5 is connected to a serial line 53 through a serial/parallel converter 6. The command memory 7 is connected to a serial line 54 through a parallel/serial converter 8.

The main control section 1 also has an address/ sync signal generation section 9. This address/sync signal generation section 9 is connected to a serial line 51.

A unit control section 20 has a switch 21 serving as a selection means to which a plurality of sensors Sa, Sb, ···, Sn are connected. The unit control section 20 corresponds to the above-described ASIC 103. The switch 21 repeats time-divisional scanning on the basis of a timing signal supplied from a sensor switching timing generation section 40 and sequentially selects the signals (to be referred to as sensor signals hereinafter) from the respective sensors.

The level of each sensor signal selected by the switch 21 is converted into digital data by an A/D converter 22. This digital data is held in a sensor level memory 23 as sensor level data and also supplied to a comparator 24.

The comparator 24 compares each sensor level data from the A/D converter 22 with a plurality of slice levels held in a slice level memory 25 in advance. Each comparison result is held in a comparison result memory 26. The slice level memory 25 sequentially outputs a slice level corresponding to each sensor at the same timing as the scanning timing of the switch 21 on the basis of the timing signal supplied from the sensor switching timing generation section 40.

The comparison results in the comparison result memory 26 are sequentially output in accordance with a timing signal (not shown) independently of the sensor scanning and converted into a serial signal by a parallel/serial converter 31. The converted serial signal is transmitted to the serial/parallel converter 4 in the main control section 1 through the serial line 52.

The sensor level data in the sensor level memory 23 are sequentially read out in accordance with a timing signal (not shown) independently of the sensor scanning, selected by a selector 32 which responds to an instruction from a command analysis section 36, and then converted into a serial signal by a parallel/ serial converter 33. The converted serial signal is transmitted to the serial/parallel converter 6 in the main control section 1 through the serial line 53.

A serial/parallel converter 34 converts commands transmitted from the parallel/serial converter 8 in the main control section 1 through the serial line 54 into a parallel signal. The command converted into a parallel signal is held in a command memory 35, and the held contents are analyzed by the command analysis section 36.

The command analysis section 36 analyzes a predetermined command in the command memory 35, thereby instructing the selector 32 to transmit sensor level data in the sensor level memory 23 to the main control section 1.

The command analysis section 36 also analyzes a plurality of slice levels on the basis of a predetermined command in the command memory 35 and causes the slice level memory 25 to hold the analysis results.

The command analysis section 36 also has a control means for, upon receiving a command transmitted from the main control section 1, immediately returning the same command as that received to the main control section 1 through the selector 32 and parallel/serial converter 33 (i.e., return command for echo back check).

A sync signal reception section 30 is connected to the address/sync signal generation section 9 in the main control section 1 through the serial line 51 to receive a sync signal supplied from the address/sync signal generation section 9.

The port ON/OFF memory 60 connected to the CPU 2 is connected to a serial line 62 through a parallel/ serial converter 61. The serial line 62 is further connected to an output port circuit 64 through a serial/parallel converter 63 in the unit control section 20. This output port circuit 64 is connected to a solenoid Pa, DC motor Pb, and display device Pn.

The output signal from the address/sync signal generation section 9 is connected to the serial line 51 and also to the parallel/serial converter 61. When a sync signal SYNC is at low level, the parallel/serial converter 61 outputs an address signal (A0 to A3) output from the address/sync signal generation section 9 to the serial line 62 as an SDA signal.

On the other hand, the serial/parallel converter 63 in the unit control section 20 receives an RDA signal from the serial line 62 and outputs the signal to an address analysis section 99 and output port circuit 64. When the SYNC signal from the sync signal reception section 30 is at low level, the address analysis section 99 analyzes in synchronism with the SYNC signal whether the address (A0 to A3) of the RDA signal is an address signal addressed to its own unit control section.

When the address analysis section 99 analyzes that the address signal is an address to itself, the output port circuit 64 receives the RDA signal as output port data in synchronism with the sync signal SYNC of high level.

The unit control section 20 also has a motor control circuit 65. Stepping motors Ma to Mn are connected to the motor control circuit 65.

Operation of the motor control circuit 65 will be described below in more detail.

The motor control circuit 65 is controlled upon receiving a parameter such as the initial motor speed, maximum speed, acceleration rate, deceleration rate, or operation amount and a command for the start or end of operation from the main control section 1 through the serial line 54.

First, the CPU 2 writes parameters or commands to be transmitted to the motor control circuit 65 in the command memory 7. The parallel/serial converter 8 reads out information containing various parameters and commands written in the command memory 7, converts the information into a serial signal, and transmits the serial signal to the serial/parallel converter 34 through the serial line 54. This serial signal is converted into a parallel signal by the serial/parallel converter 34 and written in the command memory 35. The contents are analyzed by the command analysis section 36, like a sensor circuit control command (sensor level read or slice level setting command). When a parameter or command should be transmitted to the motor control circuit 65, the parameter or command is transmitted to the motor control circuit 65. The motor control circuit 65 performs operation according to the thus received parameter or command.

If the parameter or command requests return of the operation result, the motor control circuit 65 transmits the operation result to the selector 32. Simultaneously, the command analysis section 36 controls the selector 32 to send the operation result from the motor control circuit 65 to the parallel/ serial converter 33, which converts the operation result into a serial signal. This serial signal is sent to the serial/parallel converter 6 on the main control section 1 side through the serial line 53, converted into a parallel signal, and stored in the response memory 5. This allows the CPU 2 to read the response of the motor control circuit 65.

Operation of the output port circuit 64 will be described next in detail.

The CPU 2 writes "1" in the port ON/OFF memory 60 at an address corresponding to an output port to be turned on or "0" at an address corresponding to an output port to be turned off. The parallel/serial converter 61 converts the contents in the port ON/OFF memory 60 into a serial signal and transmits the serial signal to the serial/parallel converter 63 through the serial line 62. The output port ON/OFF information converted into a parallel signal by the serial/parallel converter 63 is read by the output port circuit 64. The output port circuit 64 sets the output from a predetermined port in accordance with the output port ON/OFF information.

As in the above-described motor control circuit 65, if the operation result needs to be returned, it is transmitted from the output port circuit 64 to the selector 32. Simultaneously, the command analysis section 36 controls the selector 32 to send the operation result to the parallel/serial converter 33, which converts the operation result into a serial signal. This serial signal is sent to the serial/ parallel converter 6 on the main control section 1 side through the serial line 53, converted into a parallel signal, and stored in the response memory 5. This allows the CPU 2 to read the response of the response of the output port circuit 64.

The above-described contents will be reviewed here. In this control system, all of commands for the sensors Sa to Sn, commands for the output port circuit 64, and commands for the motor control circuit 65 are transmitted from the main control section 1 to the unit control section 20 side through the single serial line 54.

More specifically, under the control by the CPU 2 in the main control section 1, each command is stored in the command memory 7, converted into a serial signal by the parallel/serial converter 8, and transmitted to the serial/parallel converter 34 on the unit control section 20 side through the serial line 54. The serial signal is converted into a parallel signal by the serial/parallel converter 34 and stored in the command memory 35. The command analysis section 36 on the output side analyzes the purpose of the control command, so the command is sent to a corresponding section. The section that has received the command performs predetermined operation based on the command.

If the contents of the command or parameter sent to the section include request for return of the operation result, the response of the section is stored in the response memory 5 through the parallel/serial converter 33, serial line 53, and serial/parallel converter 6. This allows the CPU 2 to read the response of the section.

As described above, commands for controlling the operation status of the sensors Sa to Sn, a command for controlling the operation status of the output port circuit 64, and a command for controlling the motor control circuit 65 to start/stop rotating the motor can be transmitted through the single serial line 54. For the response as well, responses from the sensors Sa to Sn, a response from the output port circuit 64, and a response from the motor control circuit 65 can be transmitted through the single serial line 53.

In this control system, the output signals from the sensors Sa to Sn are sequentially selectively output through the switch 21 and converted into digital signals by the A/D converter 22 that receives the output signals. The comparator 24 compares each digital signal with a threshold level stored in the sensor level memory 23 in advance. The comparison result is stored in the comparison result memory 26, converted into a serial signal by the parallel/serial converter 31, and transmitted to the serial/parallel converter 4 on the main control section 1 side through the serial line 52. The serial signal is converted into a parallel signal by the serial/parallel converter 4 and stored in the sensor ON/OFF memory 3.

An application example of the above-described embodiment will be described next. The above-described embodiment assumes that the control CPU and simulator are directly connected to a single dual port RAM, and is therefore unsuitable to a flexible arrangement with a plurality of simulators or a plurality of control CPUs or with the control CPU connected to another device. An application example for such an arrangement will be described below.

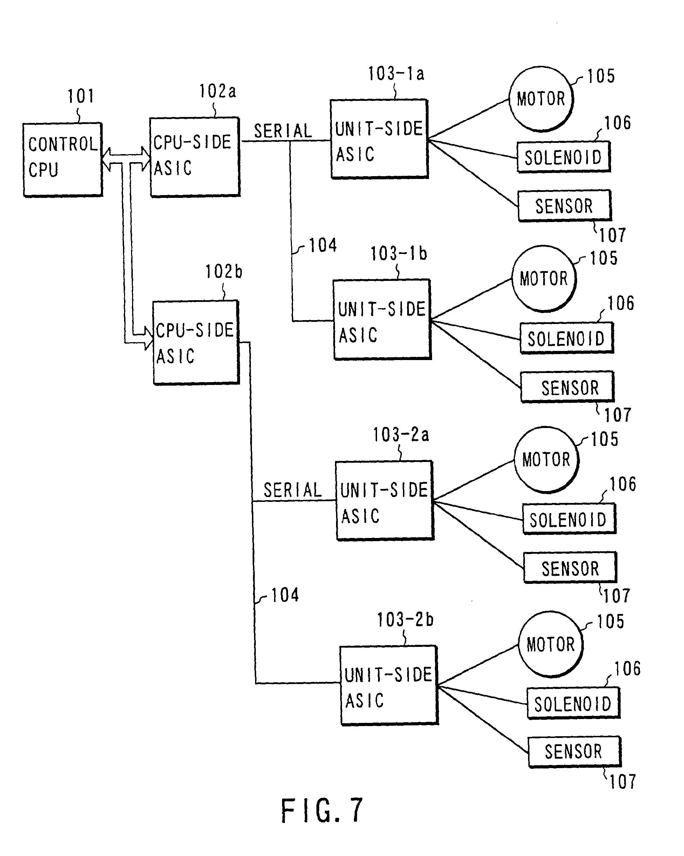

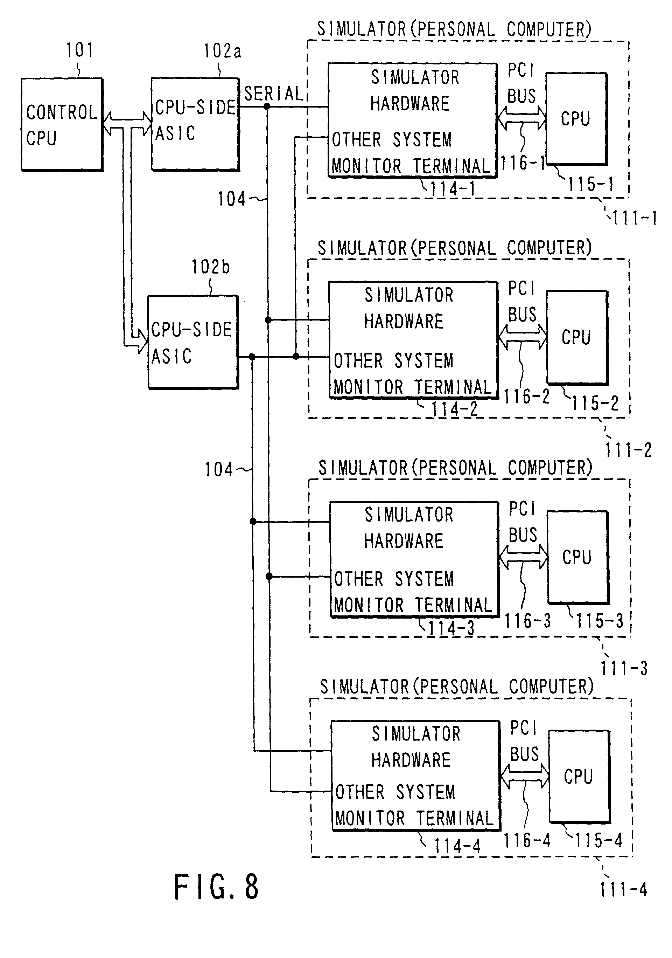

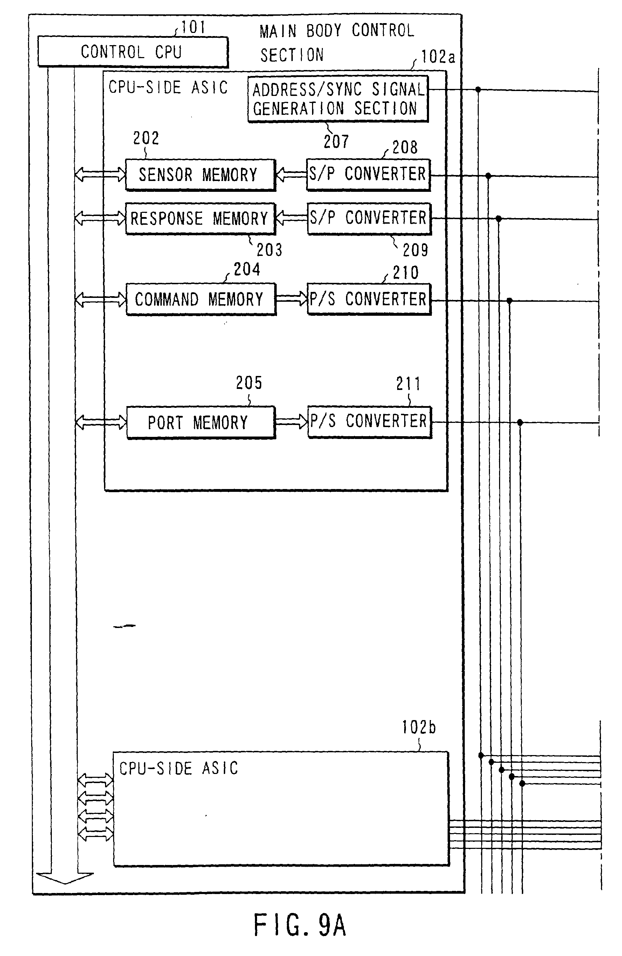

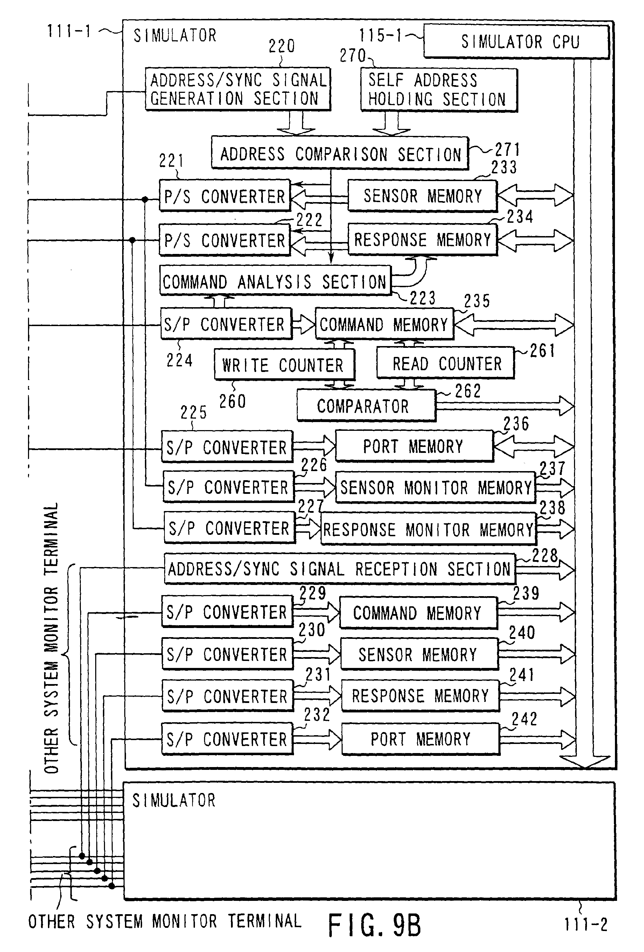

Debug using a real machine will be described with reference to FIG. 7, and as a comparison, debug (simulation system) of the present invention without using any real machine will be described with reference to FIGS. 8, 9A and 9B. FIG. 7 is a block diagram showing the schematic arrangement of real machine hardware. FIGS. 8, 9A and 9B are block diagrams showing the schematic arrangement of the simulation system.

As shown in FIG. 7, in the real machine, ASICs 102a (CPU side) and 102b (CPU side) for controlling the mechanism are connected to the control CPU 101. The ASIC 102a is connected to ASICs 103-la and 103-1b through the serial line 104. Each of the ASICs 103-1a and 103-1b is connected to the motor 105, solenoid 106, and sensor 107. The ASIC 102b is connected to ASICs 103-2a and 103-2b through the serial line 104. Each of the ASICs 103-2a and 103-2b is connected to the motor 105, solenoid 106, and sensor 107.

The control CPU 101 can control the motors 105, solenoids 106, and sensors 107 connected to the ASICs 103-1a, 103-1b, 103-2a, and 103-2b by writing control information in the registers of the ASICs 102a and 102b.

The motors 105, solenoids 106, and sensors 107 operate in accordance with the control information transmitted from the control CPU 101 through the ASICs 103-1a, 103-1b, 103-2a, and 103-2b, operations of the mechanism and medium occur, and as a result, the ON/OFF state of a sensor changes. The control CPU 101 can detect the status of each sensor connected to the ASICs 103-1a, 103-1b, 103-2a, and 103-2b by looking up the registers of the ASICs 102a and 102b.

To the contrary, in the simulation system, a plurality of simulators 111-1, 111-2, 111-3, and 111-4 are arranged, as shown in FIG. 8. The simulator 111-1 has simulator hardware 114-1 and CPU 115-1. The simulator hardware 114-1 and CPU 115-1 are connected through a PCI bus 116-1. The simulator 111-2 has simulator hardware 114-2 and CPU 115-2. The simulator hardware 114-2 and CPU 115-2 are connected through a PCI bus 116-2. The simulator 111-3 has simulator hardware 114-3 and CPU 115-3. The simulator hardware 114-3 and CPU 115-3 are connected through a PCI bus 116-3. The simulator 111-4 has simulator hardware 114-4 and CPU 115-4. The simulator hardware 114-4 and CPU 115-4 are connected through a PCI bus 116-4.

The ASIC 102a (a first series) is connected to the simulator hardware 114-1, 114-2, 114-3, and 114-4. The ASIC 102b (a second series) is also connected to the simulator hardware 114-1, 114-2, 114-3, and 114-4.

The simulator hardware 114-1, 114-2, 114-3, and 114-4 seem the same as the ASICs 103-1a, 103-1b, 103-2a, and 103-2b when viewed from the ASICs 102a and 102b. The simulator hardware 114-1, 114-2, 114-3, and 114-4 and ASICs 102a and 102b exchange information in the sensor memory, command memory, response memory, and the like through the serial line 104.

In executing the real machine control program by the control CPU 101, the simulator receives control information written by the control CPU 101, and the control CPU 101 receives an operation result written by the simulator.

The simulator program looks up a mechanism operation description defined in advance, simulates the operation according to the control information, and writes a resultant change in sensor in the simulator hardware. The control CPU 101 can read the simulation result written by the simulator program as a change in sensor as if the control CPU looked up a change in sensor status as a result of mechanism operation in the real machine.

FIGS. 9A and 9B will be briefly described. FIGS. 9A and 9B are block diagrams showing details of the internal arrangement of the CPU-side ASIC and simulator 111-1 in the simulation system shown in FIG. 8.

The CPU-side ASIC 102a has a sensor memory 202, response memory 203, command memory 204, port memory 205, address/sync signal generation section 207, serial/parallel converters 208 and 209, and parallel/ serial converters 210 and 211. Sensor information (ON/OFF) and response information from the sensor are written in the sensor memory 202 and response memory 203, respectively. Command information and port information sent to the simulator are written in the command memory 204 and port memory 205, respectively. The CPU-side ASIC 102b has the same basic arrangement as that of the CPU-side ASIC 102a.

The simulator 111-1 has an address/sync signal generation section 220, parallel/serial converters 221 and 222, command analysis section 223, serial/parallel converters 224, 225, 226, and 227, address/sync signal reception section 228, serial/parallel converters 229, 230, 231, and 232, sensor memory 233, response memory 234, command memory 235, port memory 236, sensor monitor memory 237, response monitor memory 238, command memory 239, sensor memory 240, response memory 241, port memory 242, write counter 260, read counter 261, comparator 262, self address holding section 270, and address comparison section 271. Each of the simulators 111-2, 111-3, and 111-4 has the same basic arrangement as that of the simulator 111-1.

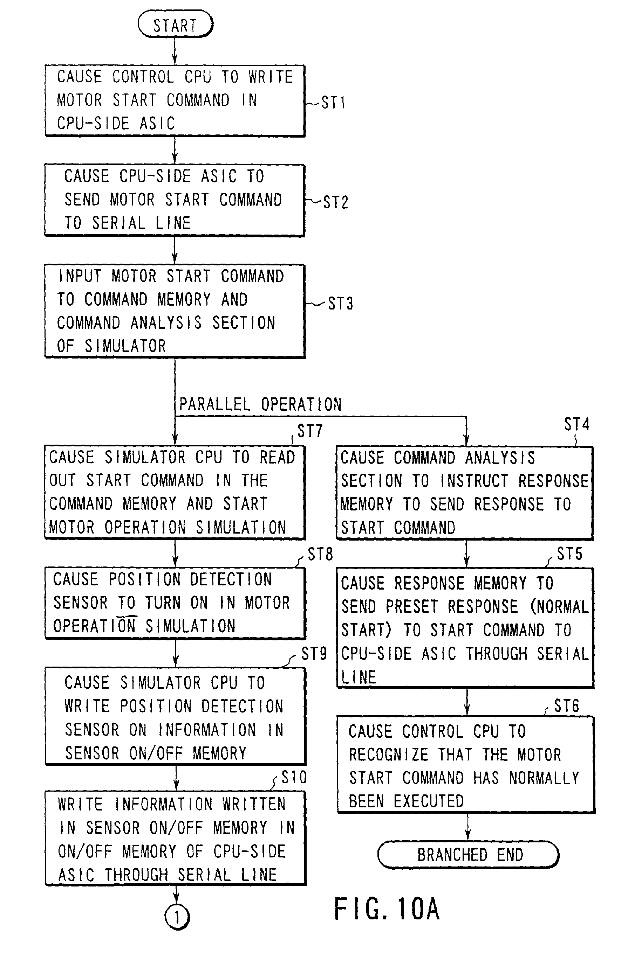

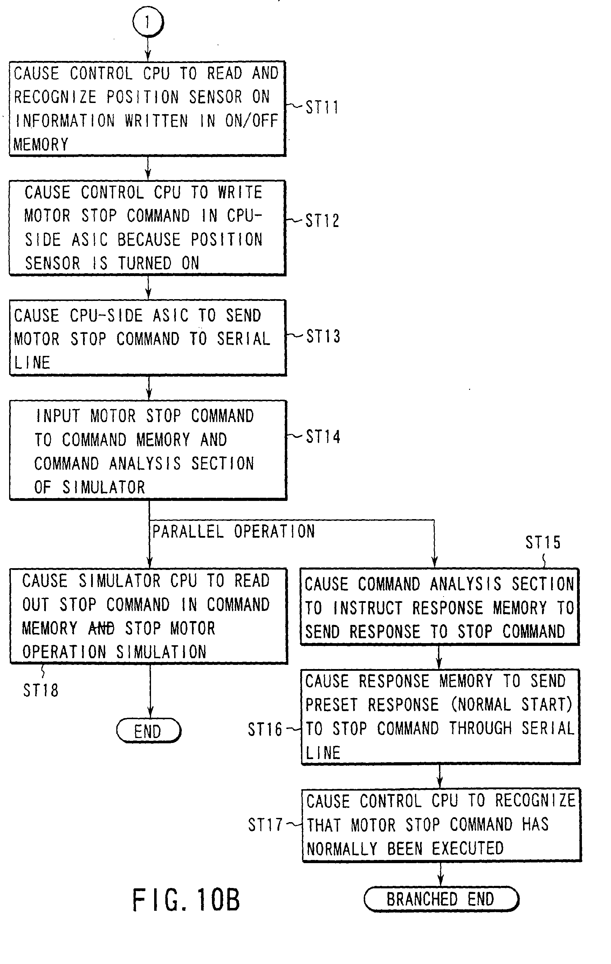

Operation of the simulation system will be described with reference to the flow charts shown in FIGS. 10A and 10B.

First, the control CPU 101 writes a motor start command in the CPU-side ASIC 102a (ST1). The CPU-side ASIC 102a sends the motor start command to the serial line (ST2). The motor start command is stored in the command memory 235 and command analysis section 223 of the simulator 111-1 (ST3). Then, the flow branches to parallel operations.

One parallel operation will be described first. The command analysis section 223 instructs the response memory 234 to send a response to the start command (ST4). The response memory 234 sends a preset response (normal start) to the start command to the CPU-side ASIC 102a through the serial line (ST5). The control CPU 101 recognizes that the motor start command has normally been executed (ST6). This parallel operation is ended here.

The other parallel operation will be described next. The simulator CPU 115-1 reads out the start command from the command memory 235 and starts motor operation simulation (ST7). In the motor operation simulation, the position detection sensor is turned on (ST8). The simulator CPU 115-1 writes the position detection sensor ON information (sensor information) in the sensor memory 233 (ST9). The sensor information written in the sensor memory 233 is written in the sensor memory 202 of the CPU-side ASIC 102a through the serial line (ST10). The control CPU 101 reads and recognizes the sensor information written in the sensor memory 202 (ST11). That the position sensor is turned on is recognized, and the control CPU 101 writes a motor stop command in the command memory 204 of the CPU-side ASIC 102a (ST12). The CPU-side ASIC 102a sends the motor stop command to the serial line (ST13). The motor stop command is written in the command memory 235 and command analysis section 223 of the simulator 111-1 (ST14). The flow branches to parallel operations again.

One parallel operation will be described first. The command analysis section 223 instructs the response memory 234 to send a response to the stop command (ST15). The response memory 234 sends a preset response (normal start) to the stop command to the CPU-side ASIC 102a through the serial line (ST16). The control CPU 101 recognizes that the motor stop command has normally been executed (ST17).

The other parallel operation will be described next. The simulator CPU 115-1 reads out the stop command from the command memory 235 and stops the motor operation simulation (ST18).

Linked operation of a plurality of simulators will be described next.

The mechanism of a real machine is constituted by a number of elements, and each element has an actuator such as a motor and a sensor for monitoring the operation of the actuator. The control CPU makes link the operations of the elements, thereby implementing the function of the entire system. Although the motors of the mechanisms are independently driven, the mechanisms may be related to each other.

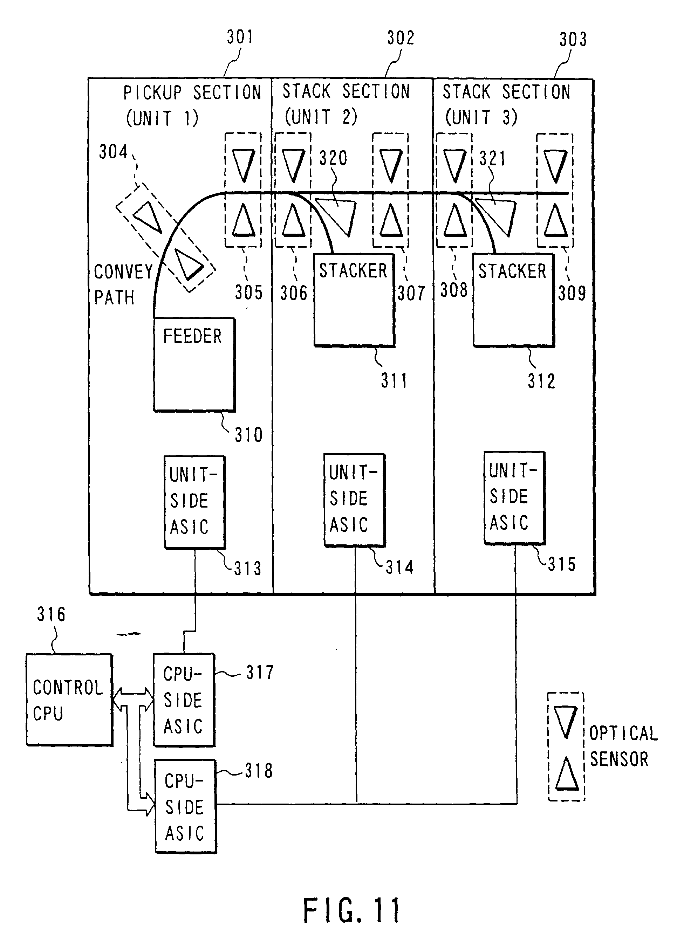

For example, in the system shown in FIG. 11, a medium is picked up by a pickup section 301 (unit 1) and conveyed to stack sections 302 (unit 2) and 303 (unit 3). The pickup section 301 is controlled through a unit-side ASIC 313. The stack section 302 is controlled through a unit-side ASIC 314. The stack section 303 is controlled through a unit-side ASIC 315. Hence, when the medium leaves the pickup section 301, the CPU-side ASIC related to control is switched.

When such a system is to be simulated by a simulator, the pickup section 301 and stack sections 302 and 303 can be simulated by a single simulator without any problem. In fact, however, the simulator hardware of one simulator and the execution speed of the simulator are limited. Hence, a plurality of simulators must be parallelly used. An example is the system shown in FIG. 8.

In this case, timing synchronization between the plurality of simulators poses a problem. In the real machine, the medium physically operates (moves). For this reason, a medium leaves the pickup section 301 and is immediately detected by a sensor 306 at the inlet of the stack section 302. In the simulator as well, in simulation of the pickup section 301, that the medium leaves the pickup section 301 must be transmitted to simulation of the stack section 302, and the medium operation simulation must be started in the simulation of the stack section 302.

In the present invention, as shown in FIGS. 8, 9A and 9B, each simulator hardware has not only a serial I/F for the CPU-side ASIC to be controlled but also hardware (reception function) for monitoring the serial I/F of the other CPU-side ASIC. This hardware corresponds to the address/sync signal reception section 228, serial/parallel converters 229, 230, 231, and 232, command memory 239, sensor memory 240, response memory 241, and port memory 242.

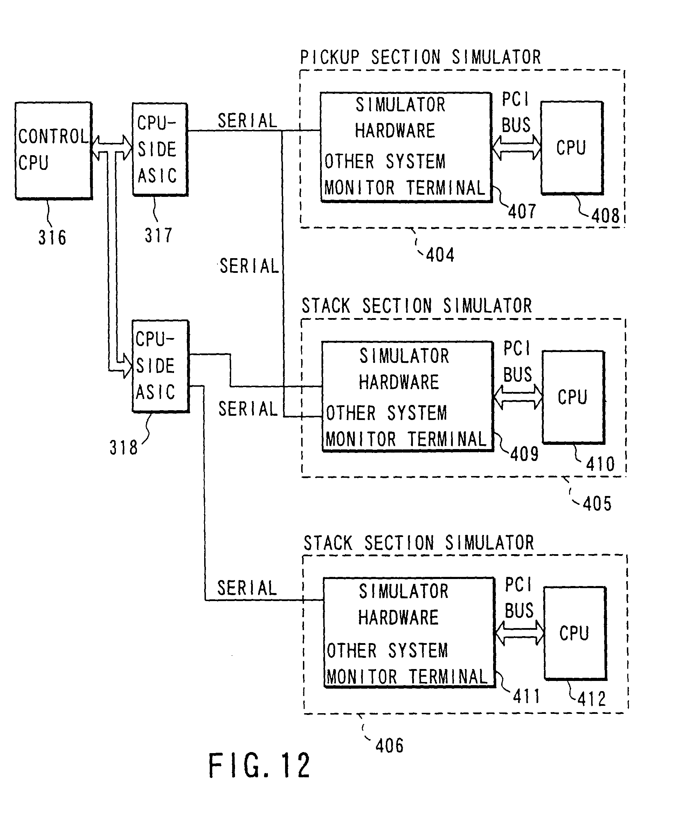

A method of realizing synchronization between the simulators using the reception function will be described next with reference to FIGS. 11 and 12.

First, the flow of control in the real machine will be described with reference to FIG. 11. Medium pickup control and conveyance control to the outlet of the pickup section 301 are done by a control CPU 316 through a CPU-side ASIC 317 and unit-side ASIC 313. On the basis of a control program executed by the control CPU 316, a feeder 310 is controlled to send the medium to the convey path, and the passage of the medium is monitored by sensors 304 and 305. When the passage of the medium is detected by the sensor 305, the flow advances to control of the stack section 302.

Control of the stack section 302 is done by the control CPU 316 through a CPU-side ASIC 318 and unit-side ASIC 314. In the stack section 302, the passage of the medium conveyed from the pickup section 301 is monitored by the sensor 306. When the passage of the medium is detected by the sensor 306, and the medium should be stacked on a stacker 311, it is stacked on the stacker 311 by driving a gate 320. If the medium should be conveyed to a stack section 303, it is conveyed to the stack section 303 without driving the gate 320.

Control of the stack section 303 is done by the control CPU 316 through the CPU-side ASIC 318 and unit-side ASIC 315. The basic operation of the stack section 303 is the same as that of the stack section 302.

The flow of control in the simulator will be described next with reference to FIG. 12. As shown in FIG. 12, a pickup section simulator, stack section simulator 405, and stack section simulator 406 are separated. The stack section simulator 405 and stack section simulator 406 are connected to the CPU-side ASIC 318. The two stack sections may be integrated into one simulator, and simulation may be executed for the two stack sections. However, the simulator processing capability may fall short, so use of separate simulators warrants higher flexibility. The control CPU 316, CPU-side ASIC 317, and CPU-side ASIC 318 are the same as those in the real machine.

When the control CPU 316 attempts to control the pickup section 301 through the CPU-side ASIC 317 and CPU-side ASIC 318, actually, simulator hardware 407 in a pickup section simulator 404 receives an instruction such as a motor driving command through the CPU-side ASIC 317, and pickup operation simulation is started. Consequently, the pickup section simulator 404 simulates pickup of a medium and arrival and passage of it to the sensor in the real machine, and transmits a signal corresponding to the sensor output to the CPU-side ASIC 317 in accordance with the simulation state. The control CPU 316 executes control as if the medium were picked up and passed through each sensor in the real machine. After simulation to the sensor passage is executed by the pickup section simulator 404, the stack section simulator 405 takes over the simulation.

The other system monitor terminal of simulator hardware 409 in the stack section simulator 405 is connected to the serial line of the CPU-side ASIC 317. The stack section simulator 405 can monitor the control information from the CPU side, such as the port ON/OFF signal, and the simulation result such as the sensor ON/OFF signal exchanged between the CPU-side ASIC 317 and the pickup section simulator 404. With the above mechanism, the stack section simulator 405 recognizes the timing of the medium passage and starts simulating medium conveyance in the pickup section simulator 404 after a predetermined delay from the passage.

Details of the simulator hardware 407, 409, and 411 will be described next.

Address selection will be described first. In the real machine, for example, up to 16 unit-side ASICs can be connected to one CPU-side ASIC. All the unit-side ASICs are connected to the CPU-side ASIC through a serial line. Address data sent from the CPU-side ASIC is input to the unit-side ASICs through the serial line. By this address data, a specific unit-side ASIC is selected. The selected specific unit-side ASIC starts transmitting/receiving data. Simulator hardware is also selected by an address.

The simulator CPU 115-1 shown in FIG. 9B writes the designated address in the self address holding section 270. The address comparison section 271 compares the address data received by the address/sync signal generation section 220 with the address held in the self address holding section. If the addresses match, a transmission enable signal is sent to the parallel/ serial converters 221 and 222 and a reception enable signal to the serial/parallel converters. With this operation, simulation of control of the unit having the address written in the self address holding section 270 becomes possible. The self address holding section 270 can hold a plurality of addresses (16 at maximum). Simulation of a mechanism controlled by a plurality of unit-side ASICs can be executed using one simulator.

Command reception will be described next. Commands from the CPU-side ASIC are sent at a short interval of, e.g., 128 *µ* sec. For this reason, the simulator software cannot receive all commands in some cases. To cope with this problem, the command memory 235 has a memory area capable of holding a plurality of commands. Even when a command is read out by the simulator software with a slight delay, the operation can be continued without any command reception error. In addition, when the simulator software reads out a command with a delay, the next command may be sent and overwrite the contents in the command memory 235 before the preceding command in the command memory 235 is read out. In this case, since command reception by the simulator software is omitted, and a simulation result error occurs, this error need to be displayed. More specifically, the write counter 260 for counting the write from the serial/parallel converter 224 and the read counter 261 for counting the read from the simulator CPU 115-1 are prepared. If the difference in count value between the two counters exceeds the number of command holdable in the command memory 235, the comparator 262 holds the error. After the simulation is ended, the simulator checks the contents in the comparator 262. If an error is held, this error is displayed.

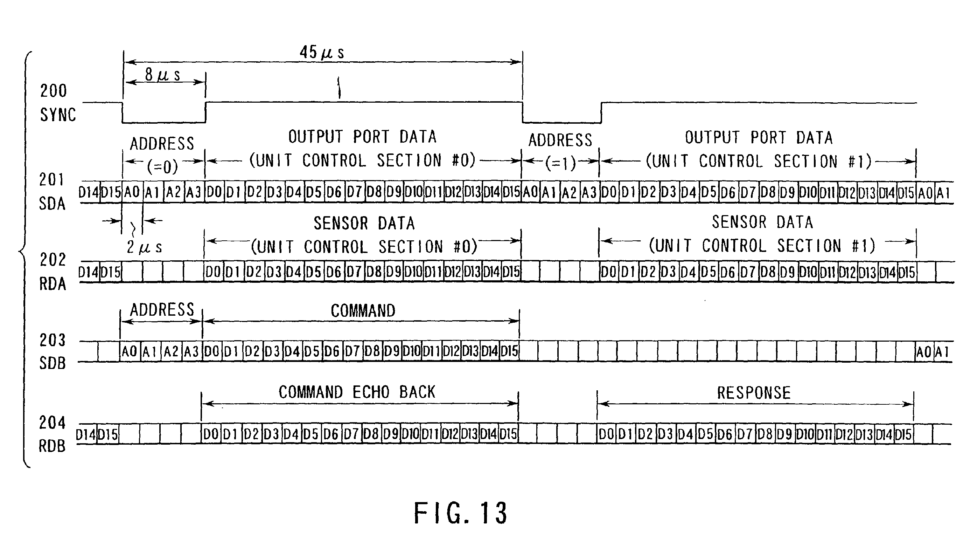

Response sending will be described next. The unit-side ASIC in the real machine analyzes a command received by the command analysis section 36 in FIG. 6B, controls the selector 32 in accordance with the analysis result, and sends response data. The response data is the operation result of the unit-side ASIC. Since only data that has already been held needs to be sent, the response is returned in a very short time of, e.g., 200 nsec. The communication between the CPU-side ASIC and the unit-side ASIC in the real machine is a permanent protocol where response reception starts immediately after command sending (FIG. 13). If the response delays, the CPU-side ASIC causes an error. For this reason, it is hard to execute response sending processing next to command reception by the simulator software.

The simulator hardware holds response contents in the response monitor memory 238 in advance. Upon receiving a command, the command analysis section 223 automatically selects a corresponding response and sends it from the response memory.

Sending of sensor ON/OFF information will be described finally. Transmission of a sensor ON/OFF signal from the unit-side ASIC to the CPU-side ASIC must be done in a time as short as possible to prevent deterioration in accuracy of monitor time of the sensor. For example, when the transmission interval of the sensor ON/OFF signal is 1 msec, the time until the CPU-side ASIC recognizes the change in sensor status varies on the order of 1 msec (an error occurs). In the real machine, the transmission interval of the sensor ON/OFF signal is, e.g., 128 *µ* sec.

However, it is difficult in simulation on the simulator to always maintain the transmission interval of 128 *µ* sec because the execution time changes depending on conditions. In the present invention, sensor information (ON/OFF information) written by the simulator CPU 115-1 is held in the sensor memory 233, and the sensor information previously written in the sensor memory 233 is sent until the contents of the sensor memory 233 are updated by the simulator CPU 115-1. This prevents any operation error due to the sensor signal when viewed from the control CPU.

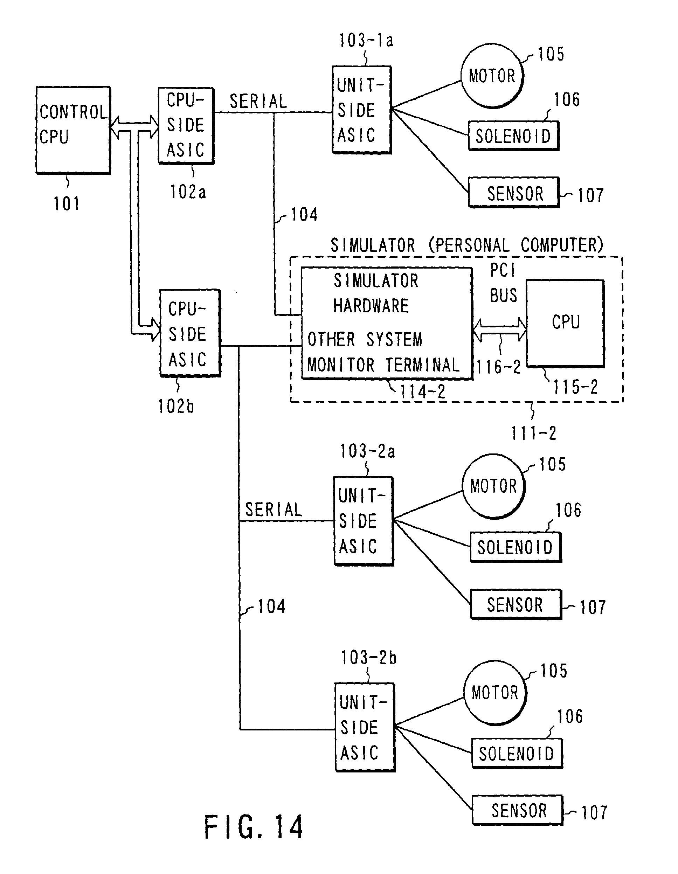

As shown in FIG. 14, a simulator and a real machine mechanism may be simultaneously used. With the arrangement shown in FIG. 14, only some mechanisms of the system can be simulated by the simulator, and for the remaining mechanisms, the real machine can be used to confirm the entire system operation. As described above, a simulator can monitor the operation of another simulator. That is, in the arrangement shown in FIG. 14, the simulator can monitor the operation of the real machine and execute simulation while keeping synchronization with the operation of the real machine.

According to the above-described application examples, the following effects can be obtained.
· Since the unit-side ASIC of mechanism control hardware is simulated and made connectable to the CPU-side ASIC through a serial line, mechanism operation can be simulated as if a unit were connected without modifying the control hardware of the real machine.
· When a plurality of simulators are used, the simulators are allowed to mutually monitor control information and sensor change information from the control CPU, thereby synchronizing their operations with each other.
· When a plurality of CPU-side ASICs are used, separate serial lines are used, and therefore, the above mutual monitor is impossible. However, when a function of monitoring the remaining serial lines is prepared in each simulator, the operations can be synchronized as if the simulators were connected to a single CPU-side ASIC.

According to the present invention, a simulator and simulation method which make it possible to debug a control program as if a real machine were used even before the real machine is completed, and to verify the control program by arbitrarily generating various anomalies can be provided.

## Claims

1. A simulator is **characterized by** comprising:
a simulation CPU (115);
a memory (114a) write-accessible from one of said simulation CPU and a control CPU connected to said simulator and read-accessible from the other;
means (116) for causing said simulation CPU to read out control information written in said memory by the control CPU; and
means (116) for writing an execution result of execution of simulation based on the control information in said memory in a state readable by the control CPU.

2. A simulator according to claim 1, **characterized in that**
said simulator further comprises connection means (116) for connecting said simulation CPU to said memory, and
the control information is read out from said memory or the execution result is written in said memory through said connection means.

3. A simulator according to claim 1, **characterized in that** after the execution result of the simulation is written in said memory, an interrupt is requested of the control CPU.

4. A simulator according to claim 3, **characterized by** further comprising
count means (114) for counting the interrupt, and
transmission means (114) for transmitting timeout data on the basis of a count value of said count means.

5. A simulator **characterized by** comprising:
a first memory (114a) in which control information is written by a control CPU connected to said simulator;
a second memory (114a) from which information can be read out by the control CPU;
means (116) for reading out the control information from said first memory;
means (115) for generating information of a control result based on the readout control information; and
means (115) for writing the generated information of the control result in said second memory.

6. A simulator according to claim 5, **characterized in that** after the information of the control result is written in said second memory, an interrupt is requested of the control CPU.

7. A simulator according to claim 6, **characterized by** further comprising
count means (114) for counting the interrupt, and
transmission means (114) for transmitting timeout data on the basis of a count value of said count means.

8. A simulator according to claim 5, **characterized in that** the control information corresponds to a command, and the control result corresponds to a response.

9. A simulator **characterized by** comprising:
a first memory (114a) from which information can be read out by a control CPU connected to said simulator; and
means (116) for periodically writing a sensor status in said first memory.

10. A simulator according to claim 9, **characterized by** further comprising
a second memory (114a) in which a command is written by the control CPU,
means (116) for reading out the command from said second memory,
means (115) for generating a response based on the readout command, and
means (116) for writing the generated response in said first memory.

11. A simulator according to claim 10,
**characterized by** further comprising
a third memory (114a) in which output port ON/OFF information is written by the control CPU, and
means (116) for reading out the output port ON/OFF information from said third memory.

12. A simulator according to claim 9, **characterized in that** after the sensor status is written in said first memory, an interrupt is requested of the control CPU.

13. A simulator according to claim 12, **characterized by** further comprising
count means (114) for counting the interrupt, and
transmission means (114) for transmitting timeout data on the basis of a count value of said count means.

14. A simulation method **characterized by** comprising the steps of:
causing a control CPU to write control information in a first memory (ST21);
causing a simulation CPU to read out the control information written in the first memory (ST22);
causing the simulation CPU to execute simulation based on the control information (ST23);
causing the simulation CPU to write a simulation result in a second memory (ST24); and
causing the control CPU to read out the simulation result written in the second memory (ST25).

15. A method according to claim 14, **characterized by** further comprising the step of, after the simulation result is written in the second memory, requesting an interrupt of the control CPU (ST26).

16. A method according to claim 15, **characterized by** further comprising the steps of
counting the interrupt (ST27), and
transmitting timeout data on the basis of a count value of the interrupt (ST28).

17. A simulator for simulating operation on a unit side in an apparatus which transmits command information from a main body side to the unit side, transmits an execution result of the command from the unit side to the main body side as a response, and transmits sensor information on the unit side to the main body side, **characterized by** comprising:
a command memory (235) for holding the command information transmitted from the main body side, said command memory being read-accessible from a unit-side CPU;
a sensor memory (233) in which the sensor information can be written by the unit-side CPU;
means (221) for transmitting the sensor information written in said sensor memory to the main body side;
a response memory (234) in which response information can be written by the unit-side CPU; and
means (222) for transmitting the response information written in said response memory to the main body side.

18. A simulator according to claim 17, **characterized in that**
said simulator further comprises
an address memory (270) for holding a self address in advance, and
comparison means (271) for comparing the self address held in said address memory with a designated address designated on the main body side, and
when a comparison result by said comparison means indicates that the addresses match, the sensor information is received, the command information is received, and the response is sent.

19. A simulation system **characterized by** comprising:
a first simulator and a second simulator, each being connected to a main body, for simulating operation on a unit side,
said first simulator comprising means (230) for receiving sensor information transmitted from said second simulator to said main body side, and
said first simulator operating in synchronism with said second simulator on the basis of the received sensor information.

20. A system according to claim 19, **characterized in that**
said system simulates operation on a unit side using at least two simulators of an apparatus which transmits command information from the main body side to the unit side, transmits an execution result of the command from the unit side to the main body side as a response, and transmits sensor information on the unit side to the main body side, and
said first simulator comprises
a command memory (235) for holding the command information transmitted from the main body side, said command memory being read-accessible from a unit-side CPU;
a sensor memory (233) in which the sensor information can be written by the unit-side CPU;
means (221) for transmitting the sensor information written in said sensor memory to the main body side;
a response memory (234) in which response information can be written by the unit-side CPU; and
means (222) for transmitting the response information written in said response memory to the main body side.

21. A system according to claim 20, **characterized in that** said first simulator comprises a port memory (236) for holding port information transmitted from the main body side, said port memory being read-accessible from the unit-side CPU.

22. A simulator for simulating operation on a unit side in an apparatus which transmits command information from a main body side to the unit side, transmits an execution result of the command from the unit side to the main body side as a response, and transmits sensor information on the unit side to the main body side, **characterized by** comprising:
a first command memory (235) for holding command information transmitted from said main body side via a first series, said first command memory being read-accessible from a unit-side CPU;
a sensor memory (233) in which the sensor information can be written by the unit-side CPU;
means (221) for transmitting the sensor information written in said sensor memory to said main body side via said first series;
a response memory (234) in which response information can be written by the unit-side CPU;
means (222) for transmitting the response information written in said response memory to the main body side via said first series; and
a second command memory (239) for holding command information transmitted from said main body side via a second series, said second command memory being read-accessible from the unit-side CPU.

23. A simulation system **characterized by** comprising:
a first simulator (111-2) and a second simulator (111-2),
said first simulator comprising means (230) for receiving sensor information transmitted from said second simulator to said main body side via a second series,
said first simulator operating in synchronism with said second simulator on the basis of the received sensor information,
said second simulator comprising means for receiving sensor information transmitted from said first simulator to said main body side via a first series, and
said second simulator operating in synchronism with said first simulator on the basis of the received sensor information.

24. A system according to claim 23, **characterized in that**
said system simulates operation on a unit side using at least two simulators of an apparatus which transmits command information from the main body side to the unit side, transmits an execution result of the command from the unit side to the main body side as a response, and transmits sensor information on the unit side to the main body side, and
said first simulator comprises
a first command memory (235) for holding command information transmitted from said main body side via said first series, said first command memory being read-accessible from a unit-side CPU;
a sensor memory (233) in which the sensor information can be written by the unit-side CPU;
means (221) for transmitting the sensor information written in said sensor memory to said main body side via said first series;
a response memory (234) in which response information can be written by the unit-side CPU;
means (222) for transmitting the response information written in said response memory to said first main body side via said first series; and
a second command memory (239) for holding command information transmitted from said second main body side via said second series, said second command memory being read-accessible from the unit-side CPU.

25. A system according to claim 24, **characterized in that** said first simulator comprises
a port memory (236) for holding port information transmitted from said main body side via said first series, said port memory being read-accessible from the unit-side CPU, and
a port memory (242) for holding port information transmitted from said main body side via said second series, said port memory being read-accessible from the unit-side CPU.

26. A simulation method of simulating operation on a unit side in an apparatus which transmits command information from a main body side to the unit side, transmits an execution result of the command from the unit side to the main body side as a response, and transmits sensor information on the unit side to the main body side, **characterized by** comprising the steps of:
holding the command information transmitted from the main body side in a state read-accessible from a unit-side CPU (ST1); and
transmitting sensor information and response information written by the unit-side CPU to the main body side (St5, ST10).

27. A simulation method applied to a simulation system including first and second simulators, **characterized by** comprising the steps of:
causing the first simulator to receive sensor information transmitted from the second simulator to a main body side; and
causing the first simulator to operate in synchronism with the second simulator on the basis of the received sensor information.

28. A method according to claim 27, **characterized in that**
said method simulates operation on a unit side using at least two simulators of an apparatus which transmits command information from the main body side to the unit side, transmits an execution result of the command from the unit side to the main body side as a response, and transmits sensor information on the unit side to the main body side, and
said method further comprises the steps of
causing the first simulator to hold the command information transmitted from the main body side in a state read-accessible from a unit-side CPU (ST1), and
causing the first simulator to transmit the sensor information and response information written by the unit-side CPU to the main body side (ST5, ST10).

29. A simulation method of simulating operation on a unit side in an apparatus which transmits command information from a main body side to the unit side, transmits an execution result of the command from the unit side to the main body side as a response, and transmits sensor information on the unit side to the main body side, **characterized by** comprising the steps of:
holding command information transmitted from said main body side via a first series and command information transmitted from said main body side via a second series in a state read-accessible from a unit-side CPU (ST1); and
transmitting sensor information and response information written by the unit-side CPU to said main body side (ST5, ST10) via said first series.

30. A simulation method applied to a simulation system including first and second simulators and a main body, **characterized by** comprising the steps of:
causing the first simulator to receive sensor information transmitted from the second simulator to said main body side via a second series;
causing the first simulator to operate in synchronism with the second simulator on the basis of the received sensor information;
causing the second simulator to receive sensor information transmitted from the first simulator to said main body side via a first series; and
causing the second simulator to operate in synchronism with the first simulator on the basis of the received sensor information.

31. A method according to claim 30, **characterized in that**
said method simulates operation on a unit side using at least two simulators of an apparatus which transmits command information from the main body side to the unit side, transmits an execution result of the command from the unit side to the main body side as a response, and transmits sensor information on the unit side to the main body side, and
said method further comprises the steps of
causing the first simulator to hold command information transmitted from said main body side via a first series and command information transmitted from said main body side via a second series in a state read-accessible from a unit-side CPU, and
causing the first simulator to transmit the sensor information and response information written by the unit-side CPU to said main body side via a first series.
